# EUROPEAN PATENT APPLICATION

(11) **EP 1 881 381 A2**
(43) Date of publication of application: **23.01.2008**
(21) Application number: 07112539.7
(22) Date of filing: 16.07.2007
(51) Int. Cl.: G05B 19/4061

(54) **Numerical controller having interference check function background of the invention**

(30) Priority: 19.07.2006 JP 2006196929
(71) Applicant: Fanuc Ltd, Minamitsuru-gun, Yamanashi 401-0597 (JP)
(72) Inventor: Tani, Shouki Room12-405, FANUC Manshonharimomi, Yamanashi 401-0511 (JP); Ogawa, Shuji Room12-501, FANUC Manshonharimomi, Yamanashi 401-0511 (JP); Hosokawa, Masahiko Room 11-407, FANUC Manshonharimomi, Yamanashi 401-0511 (JP); Hanaoka, Osamu, Kanagawa 226-0006 (JP)
(74) Representative: Thum, Bernhard

(57) **Abstract**

When an operation state of a numerical controller which controls a machine tool is (1) in a state were rotation of a spindle is being stopped,(2) in a state where cutting feed rate of a tool with respect to a work exceeds a set maximum cutting feed rate corresponding to a work material, or (3) in a state where the tool moves in a direction different from the work cutting direction of the tool, it is checked whether or not the tool and the work interfere with each other. In other operation states, an interference check is not executed.

## Description

### BACKGROUND OF THE INVENTION

### 1. Field of the Invention

The present invention relates to a numerical controller which controls a machine tool and, more particularly, to a numerical controller which can check interference between a tool and a work.

### 2. Description of the Related Art

In the numerical controller which controls a machine tool, a numerical controller having an interference check function to detect and prevent collision between a jig or a table with a work (object to be processed) fixed thereon and a tool by a mistake in a processing program or an erroneous operation has been known.

In a technique described in Japanese Patent Application Laid-Open No. 5-181519 in which a machine tool having two spindles which can be moved on the same axis directly delivers a work from the first spindle to the second spindle, when a distance between the two spindles is smaller than an interference distance, the two spindles are synchronously moved in response to a manual operation input which moves the two spindles in the same direction (one spindle is moved forward, and the other spindle is moved backward). On the other hand, in response to a manual operation input which moves forward (in the direction toward the second spindle) only the first spindle, the input signal is stored, and a flag is turned on. When manual operation inputs which move forward the two spindles are simultaneously performed, if the flag is set in an ON state, the two spindles are independently moved forward (in the direction toward the spindle) on the assumption that forward movement is permitted even though the distance between the two spindles is smaller than the interference distance.

As described above, a numerical controller having a conventional interference check function checks whether a tool interferes with a table or a jig in advance but does not check whether a tool interferes with a work. Since a tool is to cut a work, it is natural that the tool and the work are held in an interference state in such a cutting state. Therefore, if an interference should be avoided by carrying out interference check, a cutting operation itself could not be performed. For this reason, interference between the tool and the work is not checked in this case.

However, if an interference between a tool and a work is not be checked in the process of cutting operation, it is possible that the tool interferes with the work in a feeding operation or the like in an operation state free from cutting, with the result that the tool and the work may be damaged. For example, in a drilling operation using a drill as a tool, when the drill is moved in X-axis and Y-axis directions perpendicular to a direction (Z-axis direction) in which the drill can cut a work to reach a hole drilling position, the drill and the work must be avoided from interfering with each other. Despite this, interference between the drill and the work is not checked. Therefore, the tool or the work may be damaged since the interference cannot be prevented.

### SUMMARY OF THE INVENTION

A numerical controller having an interference check function according to the present invention comprises: an interference check executing unit which checks interference between a tool and a work; an operation state setting unit for setting an operation state of the numerical controller which controls a machine tool in which the interference check executing unit is allowed to execute an interference check; and an execution determining unit which causes the interference check executing unit to execute an interference check when an actual operation state of the numerical controller which controls the machine tool coincides with an operation state stored in the operation state setting unit, but does not allow the interference check executing unit to execute the interference check when the actual operation state does not coincide with an operation state stored in the operation setting means.

An operation state in which the interference check executing unit is caused to execute the interference check, which is to be stored in the operation state setting unit, may be:
(1) a state where the rotation of the spindle of the machine tool controlled by the numerical controller is being stopped;
(2) a state where the tool is moving at a cutting feed rate exceeding the maximum cutting feed rate determined in advance on the basis of the material of the work; and
(3) a state where the tool is moving in a direction different from the moving direction set in advance for cutting by the tool.

The numerical controller having an interference check function according to the present invention may further comprise a storing unit for storing a tool database storing data including respective tool numbers, the work cutting direction of a tool corresponding to the tool number, and a maximum cutting feed rate for the material of a work, and also an input unit for inputting the tool numbers and a work material. And the operation state setting unit reads, on the basis of a tool number and a work material input by the input unit, the work cutting direction of the tool corresponding to the tool number and the maximum cutting feed rate for the material of the work from the tool database to set the read work cutting direction and maximum cutting feed rate as an operation state for use in a situation where an interference check is executed.

According to the present invention, in an operation state in which a tool and a work must not interfere with each other, an interference check between the tool and the work is performed so that an erroneous interference between the tool and the work may be prevented from occurring.

### BRIEF DESCRIPTION OF THE DRAWINGS

FIG. 1 is a main block diagram of a numerical controller according to an embodiment of the present invention.
FIG. 2 is a flow chart showing an algorithm of a valid/invalid setting process for checking an interference between the tool and the work in the numerical controller shown in FIG. 1.

### DETAILED DESCRIPTION OF THE PREFERRED EMBODIMENTS

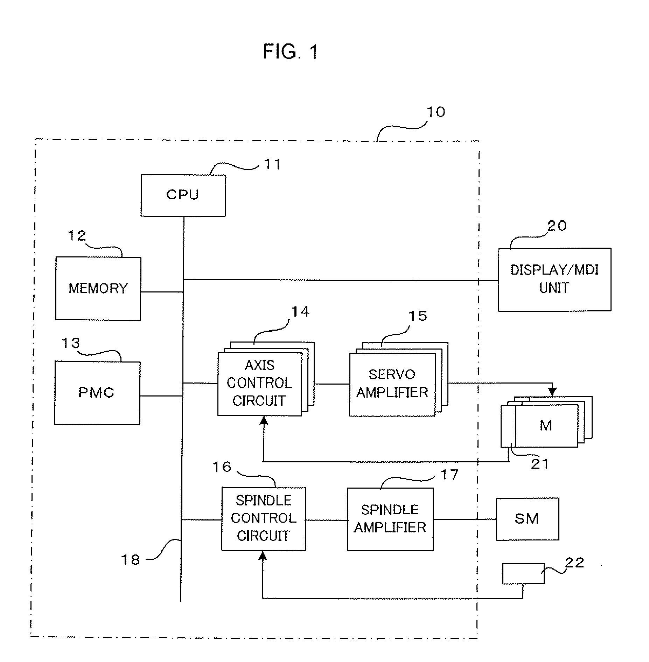

FIG. 1 is a block diagram of an essential part of a numerical controller according to an embodiment of the present invention.

A CPU 11 is a processor which entirely controls a numerical controller 10. To the CPU 11, a memory 12, a PMC (Programmable Machine Controller) 13, axis control circuits 14 which control servo motors M for feed shafts, and a spindle control circuit 16 which controls a spindle motor SM are connected through a bus 18. The memory 12 is constituted by a ROM, a RAM, a nonvolatile RAM, or the like. The CPU 11 reads a system program stored in the memory 12 through the bus 18 and entirely controls the numerical controller according to the read system program.

In the memory 12, various data such as a set value input by an operator through a display/MDI unit 20 is stored. In the memory 12, furthermore, a processing program loaded through an interface (not shown), a processing program input through the display/MDI unit 20, and the like are stored. The display/MDI unit 20 is constituted a display unit constituted by a CRT or a liquid crystal display and a manual data input unit such as a keyboard.

Furthermore, in the memory 12, an interference check program which executes an interference check between a tool and a thing (including a work) other than the tool is stored. In particular, in relation to the present invention, software which determines whether or not an interference check is executed by the interference check program is stored.

The PMC 13 outputs a signal to an auxiliary apparatus and a peripheral device for a machine tool to be controlled by a sequence program such as a built-in ladder program or the like. Furthermore, the PMC 13 receives signals from various switches of an operation panel arranged on the main body of the machine tool (object to be controlled) controlled by the numerical controller 10, performs signal processing required for the signals, and delivers the processed signals to the CPU 11.

The axis control circuits 14 for the respective shafts receive movement command amounts of the shafts from the CPU 11 to output commands for the respective shafts to corresponding servo amplifiers 15. In response to the commands, the servo amplifiers 15 drive the servo motors M for the respective shafts of the machine (object to be controlled). The servo motors M for the respective shafts have a position/speed detector 21 to feed back position and speed feedback signals from the position/speed detectors 21 to the corresponding axis control circuits 14. The axis control circuits 14 execute feedback control of position and speed on the basis of the feedback signal.

The spindle control circuit 16 receives a spindle rotating command from the CPU 11 to output a spindle speed signal to a spindle amplifier 17. The spindle amplifier 17 rotates the spindle motor SM at a commanded rotating speed in response to the spindle speed signal. An encoder 22 feeds back a feedback pulse to the spindle control circuit 16 in synchronism with rotation of the spindle motor SM (or spindle). The spindle control circuit 16 performs speed control on the basis of the spindle rotating command from the CPU 11 and the feedback signal from the encoder 22.

The configuration of the numerical controller 10 is the same as that of a conventional numerical controller. However, the numerical controller 10 of this embodiment is characterized in that software which makes an interference check function valid or invalid is stored in the memory 12, and, on the basis of the software, an interference check between a tool and a work is automatically executed when the interference check is necessary as a machine tool controlled by the numerical controller 10 is in the process of operation.

Whenever check of interference between a tool and a work is required, the tool and the work are usually in a circumstance where they are prohibited to interfere with each other. When the work is actually cut by the tool, the tool and the work interfere with each other. In this state, an interference check must not be performed. However, since it is dangerous that an operation which will cause an interference is performed when the tool and the work must not interfere with each other, an interference check is executed in this case. For this reason, operation conditions in which an interference check is executed are set, and an interference check between the tool and the work is executed in an operation state where the set conditions are satisfied.

In the embodiment, an interference check is executed in the following three operation conditions:
(1) where rotation of a spindle is being stopped (for example, where rotation of a rotating tool is being stopped, or where rotation of a work on a lathe is being stopped);
(2) where a cutting feed rate of a tool with respect to a work exceeds a set maximum cutting feed rate which is set on the basis of the material of the work; and
(3) where a tool moves in a direction different from the work cutting direction of the tool (or the direction in which the tool can cut a work).

When the above condition (1) is fulfilled, check of interference between a tool and a work is carried out in order to prevent the tool from colliding with the work in a state where tool is performing a cutting work.

When the above condition (2) is fulfilled, check of interference between a tool and a work is carried out in order to avoid the tool from moving at a speed equal to or higher than an allowed feed speed set on the basis of the material of the work.

When the above condition (3) is fulfilled, check of interference between a tool and a work is carried out in order to inhibit the tool from moving in a direction other than a feed direction for cutting. In general, in the case of tools such as drill to be used in a drilling process or tap to be used in a screw cutting process, a direction in which a tool can cut a work is fixed. When the tool is moved in a direction other than the direction in which the tool can cut a work, it is in danger of interfering with a work or the like.

The condition (1) can be set by setting "stoppage of spindle rotation" in the numerical controller 10 from the beginning.

The condition (2) can be set by setting a relation between a work material and a tool by the display/MDI unit 20 before the start of processing and storing the settings in a memory, since a maximum cutting feed rate of a tool is determined on the basis of the material of the work and the type of the tool which processes the work.

The condition (3) can be set by inputting a relation between a tool and a direction in which the tool can cut a work by the display/MDI unit 20 and storing the settings in a memory, since a direction in which a tool can cut a work is determined whenever the tool to be used is determined. For example, in case of a drilling process, the direction in which a tool (drill) can cut a work is a direction (for example, a Z-axis direction) of a center axis of the drill, and a feed axis (Z axis) of the drill is set and stored as a work cutting axis.

With respect to a tool used in processing, a tool number is designated by a "T code" in an NC program which controls the process. Alternatively, a tool number is designated at a time of tool exchange by a sequence program (ladder program) executed by the PMC 13. For this reason, in setting of the above condition (2) and the condition (3), the "maximum cutting feed rate" in the condition (2) and the "direction in which a tool can cut a work" in the condition (3) can be calculated by using the tool number designated by an NC program or the sequence program. For this purpose, a tool database in which relations between tool numbers and pieces of tool information are stored is registered in the memory 12 or in a storing device arranged outside the numerical controller in advance. And, the numerical controller 10 is configured to have a function that reads information from the tool database through a communication line on the basis of an input tool number and a work material and sets the read information as a condition for checking interference between the tool and the work.

The tool database stores data including tool numbers, the direction in which each of the tools corresponding to a tool number can cut a work and a maximum cutting feed rate with respect to the material of the work. For example, the tool database may store tool numbers, and type, size and material of each of tools corresponding to a tool number, the direction in which each of the tools can cut a work, and a maximum cutting feed rate with respect to the material of the work. The tool database is stored in the memory 12, an external storing device, and the like.

A work material to be used can be set by setting a parameter by the display/MDI unit 20 or set through a display screen which is set on a display unit for setting a work material.

When a machine tool manually or automatically controlled by the numerical controller 10 is operated, as described above, a condition for checking interference between a tool and a work (stoppage of spindle rotation in the condition (1), a maximum cutting feed rate in the condition (2), and a work cutting direction of a tool in the condition (3)) is input and set by using the display/MDI unit 20.

When setting a maximum cutting feed rate in the condition (2) and a work cutting direction of a work in the condition (3) by using the tool database described above, a tool number and a work material are designated in the case of a manual operation. In this case, since the CPU 11 reads a maximum cutting feed rate and a direction in which a tool can cut a work (or work cutting axis) from the tool database, the speed and the direction are set as a condition for checking interference between the tool and the work.

In the case of an automatic operation, on the other hand, the CPU 11 of the numerical controller 10 reads an NC program and draws out, on the basis of a tool number specified by the NC program or a sequence program and a set work material, a maximum cutting feed rate in the condition (2) and a work cutting direction of a work in the condition (or work cutting axis)(3) from the tool database stored in the numerical controller 10 or the external storing device, and sets these drawn-out data as conditions for performing check of interference between the tool and the work. In this case, stoppage of spindle rotation in the condition (1) is automatically set as a condition for performing interference check.

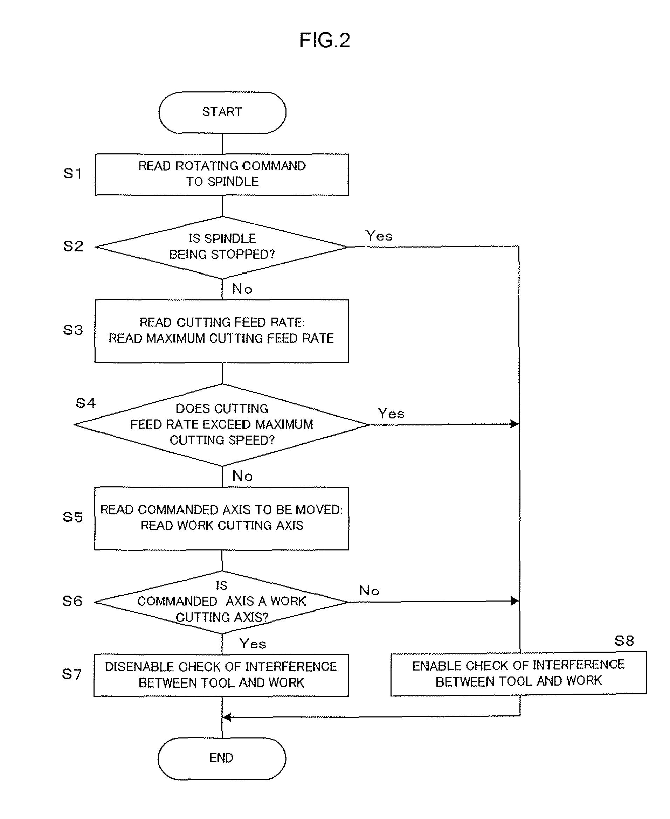

Thereafter, the CPU 11 of the numerical controller 10 executes a setting processing for determining whether a check of interference between a tool and a work shown in the flow chart in FIG. 2 is to be enabled or not every predetermined cycle. The CPU 11 of the numerical controller 10 executes an NC program to control a machine tool to perform processing. At the same time, the CPU 11 executes the process in FIG. 2 on real time base every predetermined cycle.

The CPU 11 of the numerical controller executes the NC program and stores and updates a state of the spindle, a cutting feed rate, and a commanded feed shaft which are commanded at the present, in a register for indicating a present operation state, when a spindle rotating command, a cutting feed rate (or cutting feed rate changed by an override command), and a command for a feed shaft to be driven are loaded from the NC program.

The CPU 11, which starts the processing shown in FIG. 2 (the enabling or disenabling processing of check of interference between the tool and the work), reads the rotation command of the spindle stored at the present (step 1) to determine whether the spindle is stopped or not (step 2). When the spindle is stopped, the check of interference between the tool and the work is enabled (step 8).

When the spindle rotates, on the other hand, the stored cutting feed rate and the maximum cutting feed rate are read (step 3) to determine whether the cutting feed rate exceeds the maximum cutting feed rate or not (step 4). When the cutting feed rate exceeds the maximum cutting feed rate, the processing proceeds to step 8, where check of interference between the tool and the work is enabled.

When the cutting feed rate does not exceed the maximum cutting feed rate, on the other hand, the CPU 11 reads a commanded feed shaft and a work cutting axis, which are stored (step 5) to determine whether a commanded axis to be moved (commanded feed shaft) coincides with the work cutting axis or not (step 6). When the commanded axis to be moved coincides with the work cutting axis, the check of interference between the tool and the work is disenabled (step 7). On the other hand, when the commanded axis to be moved does not coincide with the work cutting axis, the check of interference between the tool and the work is enabled (step 8). In the case of drill processing, for example, a feed shaft which can cut a work lies in an axial direction of a drill, or in a Z-axis direction, for example. In this case, the Z axis is registered as the work cutting axis in the tool database, with the result that, if the Z axis is commanded axis to be moved, the work is to be cut by means of the tool, so that the check of interference between the tool and the work is disenabled. When the commanded axis to be moved is not in the axial direction (Z axis direction) of the drill but in an X-axis direction or a Y-axis direction perpendicular to the Z-axis direction, on the other hand, a feed operation such as a positioning operation is to be performed and cutting operation is not to be performed, with the result that a check of interference between the tool and the work is enabled.

In other words, when rotation of the spindle is stopped, when the cutting feed rate exceeds the maximum cutting feed rate, and when a commanded axis to be moved is not a work cutting axis, the check of interference between the tool and the work is enabled so that interference check is executed.

When the spindle is rotating but the cutting feed rate does not exceed the maximum feed rate, and commanded axis to be moved is work cutting axis, on the other hand, the work is to be processed by the tool, and the tool and the work are held in an interference state as a matter of course. However, such a state is normal in this case, as a result, the check of interference between the tool and the work is disenabled so that interference check is not executed.

When an interference check is set to be enabled, check of interferences, including interference between a tool and a work, is performed as in the conventional art.

In the embodiment described above, stoppage of spindle rotation and the axis to be moved (feed shaft to be moved) are detected by the commands of an NC program. However, the stoppage of spindle rotation may be determined by checking whether the spindle rotates or not on the basis of a feedback signal from the encoder 22. Furthermore, a feed shaft which is in the process of moving may be determined on the basis of a signal fed back from the position/speed detector 21 arranged on an each feed shaft.

## Claims

1. A numerical controller having an interference check function comprising:
an interference check executing unit which checks interference between a tool and a work;
an operation state setting unit for setting an operation state of the numerical controller which controls a machine tool in which said interference check executing unit is allowed to execute an interference check; and
an execution determining unit which causes the interference check executing unit to execute an interference check when an actual operation state of the numerical controller which controls the machine tool coincides with an operation state stored in the operation state setting unit, but does not allow the interference check executing unit to execute the interference check when the actual operation state does not coincide with an operation state stored in the operation setting means.

2. The numerical controller having an interference check function according to claim 1, wherein an operation state in which said interference check executing unit is caused to execute the interference check, which is to be stored in said operation state setting unit, is a state where the rotation of the spindle of the machine tool controlled by the numerical controller is being stopped.

3. The numerical controller having an interference check function according to claim 1, wherein an operation state in which said interference check executing unit is caused to execute the interference check, which is to be stored in said operation state setting unit, is a state where the tool is moving at a cutting feed rate exceeding the maximum cutting feed rate determined in advance on the basis of the material of the work.

4. The numerical controller having an interference check function according to claim 1, wherein an operation state in which said interference check executing unit is caused to execute the interference check, which is to be stored in said operation state setting unit, is a state where the tool is moving in a direction different from the moving direction set in advance for cutting by the tool.

5. The numerical controller having an interference check function according to claim 1, further comprising a storing unit for storing a tool database storing data including respective tool numbers, the work cutting direction of a tool corresponding to the tool number, and a maximum cutting feed rate for the material of a work, and also an input unit for inputting the tool numbers and a work material, wherein
said operation state setting unit reads, on the basis of a tool number and a work material input by the input unit, the work cutting direction of the tool corresponding to the tool number and the maximum cutting feed rate for the material of the work from said tool database to set the read work cutting direction and maximum cutting feed rate as an operation state for use in a situation where an interference check is executed.
